# EUROPEAN PATENT SPECIFICATION

(11) **EP 3 176 866 B1**
(45) Date of publication and mention of the grant of the patent: **15.05.2019**
(21) Application number: 16199410.8
(22) Date of filing: 17.11.2016
(51) Int. Cl.: H01M 10/42, H01M 10/44, H02J 7/34, H01M 10/0525

(54) **RESONATING LITHIUM BATTERY DEVICE WITH DAMPING FUNCTION**
RESONIERENDE LITHIUMBATTERIEVORRICHTUNG MIT DÄMPFUNGSFUNKTION
DISPOSITIF DE BATTERIE AU LITHIUM RÉSONANT AVEC FONCTION D'AMORTISSEMENT

(30) Priority: 01.12.2015 CN 201510866301
(43) Date of publication of application: 07.06.2017
(73) Proprietor: Hsu, Fu-Tzu, Taipei City 10463 (TW); Tu, Chieh-Sen, New Taipei City 23158 (TW)
(72) Inventor: Hsu, Fu-Tzu, Taipei City 10463 (TW); Tu, Chieh-Sen, New Taipei City 23158 (TW)
(74) Representative: Lermer, Christoph

(56) References cited:
- CN-U- 204 721 099
- DE-A1-102011 002 673
- US-A1- 2007 166 574

## Description

### FIELD OF THE INVENTION

The present invention relates to a lithium battery device, in which at least one lithium-ion battery and at least one lithium-ion polymer battery are electrically connected in parallel, such that the lithium battery device has current/voltage resonance transition occurred therein to thereby have a damping function, enabling faster charge and discharge of the lithium battery device.

### BACKGROUND OF THE INVENTION

A lithium-ion battery is a type of battery most widely used with various kinds of consumptive electronic products. For example, most of the rechargeable batteries for different kinds of portable electronic products are lithium-ion batteries. The lithium-ion battery has the advantages of having high energy density, small volume and high output power, exhibiting no memory effect, and having low self-discharge rate when it is not in use. The lithium-ion battery also has wide working temperature range and can work normally between 20°C and 60°C.

However, the lithium-ion battery requires relatively long time to be fully charged due to its capacitive reactance, i.e. the static electricity opposing to the change of voltage across a capacitor. In addition, the service life of the lithium-ion battery has close relation with the environmental temperature and working temperature. The capacity of the lithium-ion battery tends to fade gradually if the battery often works or is stored at a high temperature. Further, the lithium-ion battery should not be overcharged or over-discharged. Therefore, the lithium-ion battery must be provided with a protection circuit to prevent it from being overcharged, over-discharged, overloaded and overheated.

A lithium-ion polymer battery can be manufactured into various shapes. Due to this feature, the lithium-ion polymer battery has become very important in the cell phone manufacturing industry that pursues light, thin and compact design of products. Also, the lithium-ion polymer battery is often used with airsoft guns and remote-control model products.

When the lithium-ion polymer battery is discharged into a load, a battery cell thereof should not be lower than 3.0 volts. If the discharging process is not stopped immediately when the battery cell of the lithium-ion polymer battery is lowered to 3.0 volts, it is possible the lithium-ion polymer battery could no longer be fully charged and have an increased internal resistance when it is used to supply power. Currently, a chip is used to prevent battery overcharge and over-discharge. Further, the lithium-ion polymer battery must be recharged with a specific charger, which can control all the individual battery cells to enable balanced charging. The specific charger can prevent the lithium-ion polymer battery from exploding and burning due to a rising temperature thereof.
Document US 2007/166574 A1 discloses a hybrid power supply unit having electrolyte cells with different discharge characteristics.
Document CN 204 721 099 U discloses an energy storing device having cell stacks including an ultra-high capacitor and a super capacitor.
Document DE 10 2011 002673 A1 refers to a battery system comprising energy storing devices connected in parallel and a chopper converter.

### SUMMARY OF THE INVENTION

A primary object of the present invention is to provide a resonating lithium battery device with damping function, which is characterized in having at least two electrically parallelly connected lithium-ion battery and lithium-ion polymer battery, such that a damping effect as a result of a resonance between the two types of battery occurs to enable faster charge and discharge of the lithium battery device.
balancing occurs between the lithium-ion battery and the lithium-ion polymer battery, the lithium battery device has a damping effect as a result of the resonance between the two types of batteries.

Another object of the present invention is to provide a resonating lithium battery device with damping function, which is characterized in that a resonance occurs between two electrically parallelly connected lithium-ion battery and lithium-ion polymer battery forming the lithium battery device, so that the lithium battery device would not have a rising temperature during charging and discharging processes and can have prolonged service life.

A further object of the present invention is to provide a resonating lithium battery device with damping function, in which an automatic voltage balancing occurs between at least two electrically parallelly connected lithium-ion battery and lithium-ion polymer battery forming the lithium battery device, and accordingly, an electrical appliance using the lithium battery device need not to use any battery management system (BMS).

To achieve the above and other objects, the resonating lithium battery device with damping function provided according to an embodiment of the present invention includes at least two similar cell stacks connected either in series or in parallel. Each of the cell stacks includes a lithium-ion battery and a lithium-ion polymer battery electrically connected in parallel. The lithium-ion battery has a capacity that is equal or close to a capacity of the lithium-ion polymer battery. Since an automatic voltage balancing occurs between the lithium-ion battery and the lithium-ion polymer battery, the lithium battery device has a damping effect as a result of the resonance between the two types of batteries.

According to the present invention, the lithium-ion battery has a capacity that is about 90 to 110% of a capacity of the lithium-ion polymer battery.

### BRIEF DESCRIPTION OF THE DRAWINGS

The structure and the technical means adopted by the present invention to achieve the above and other objects can be best understood by referring to the following detailed description of the preferred embodiment and the accompanying drawings, wherein
Fig. 1 is a schematic view showing the structure of a resonating lithium battery device with damping function according to a preferred embodiment of the present invention;
Fig. 2 is a structural view of one of many cell stacks forming the resonating lithium battery device of Fig. 1; and
Fig. 3 is a block diagram showing the resonating lithium battery device of Fig. 1 is charged with a damping charging device.

### DETAILED DESCRIPTION OF THE PREFERRED EMBODIMENTS

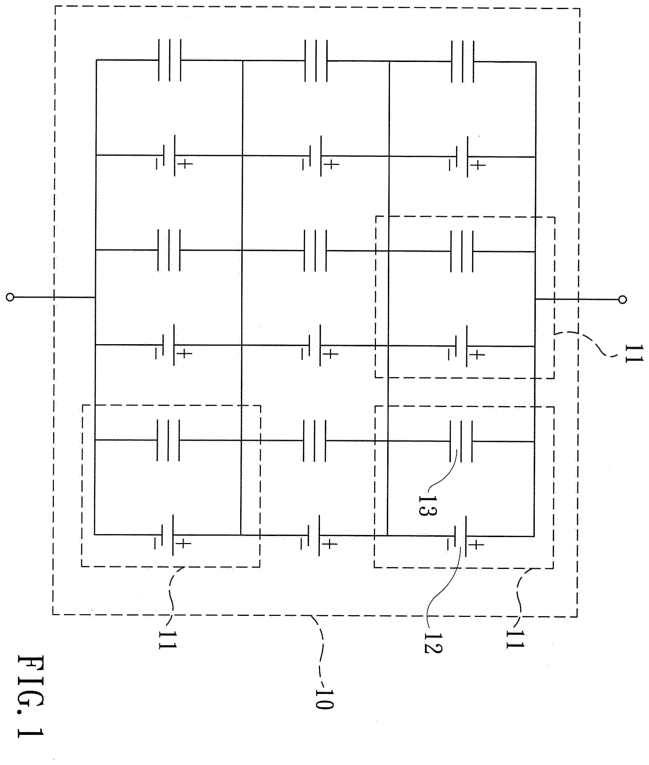

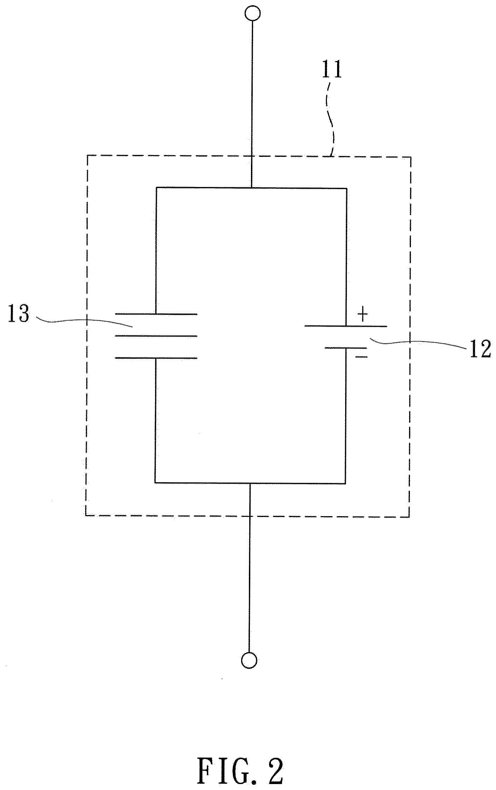

Please refer to Fig. 1, in which the structure of a resonating lithium battery device with damping function according to a preferred embodiment of the present invention is shown. For the purpose of conciseness and clarity, the present invention is also briefly referred to as the lithium battery device and generally denoted by reference numeral 10 herein. As shown, the lithium battery device 10 in the preferred embodiment is formed of at least two similar cell stacks 11 that are connected in series or in parallel. Please refer Fig. 2. Each of the cell stacks 11 includes a lithium-ion battery 12 and a lithium-ion polymer battery 13, which are electrically connected in parallel.

The lithium-ion battery 12 is an electrically current-type battery, which is contributive to discharging. On the other hand, the lithium-ion polymer battery 13 is an electrically voltage-type battery, which is contributive to charging. The lithium-ion battery 12 has a capacity equal or close to that of the lithium-ion polymer battery 13. Since the lithium-ion battery 12 and the lithium-ion polymer battery 13 are electrically connected in parallel, they must have the same voltage when they have been charged. Therefore, a voltage balance between the lithium-ion battery 12 and the lithium-ion polymer battery 13 will be automatically reached to thereby form current/voltage resonance transition, which is a damping effect.

Preferably, the lithium-ion battery 12 has a capacity the same as the capacity of the lithium-ion polymer battery 13. However, in practical implementation, it is uneasy for the lithium-ion battery 12 to have a capacity exactly the same as the capacity of the lithium-ion polymer battery 13. It is found from practical operation, when the capacity of the lithium-ion battery 12 is 90∼110% of the capacity of the lithium-ion polymer battery 13, it is sufficient for a resonance effect of automatic voltage balance to automatically occur between the lithium-ion battery 12 and the lithium-ion polymer battery 13.

The lithium-ion battery 12 and the lithium-ion polymer battery 13 are different in their energy level. The lithium-ion battery 12 is suitable for storing electrical energy in the form of electric current, while the lithium-ion polymer battery 13 is suitable for storing electrical energy in the form of voltage.

Since a completely balanced voltage between the lithium-ion battery 12 and the lithium-ion polymer battery 13 must be achieved, an instantaneous voltage imbalance, i.e. a somewhat large voltage difference, between the lithium-ion battery 12 and the lithium-ion polymer battery 13 will occur during the charge and the discharge process of the cell stack 11. At this point, the lithium-ion polymer battery 13 having a higher instantaneous voltage will automatically transfer the stored electrical energy to the lithium-ion battery 12 that has a lower voltage relative to the lithium-ion polymer battery 13, or alternatively, the lithium-ion battery 12 having a higher instantaneous voltage will automatically transfer the stored electrical energy to the lithium-ion polymer battery 13 that has a lower voltage relative to the lithium-ion battery 12, so that the voltage of the lithium-ion battery 12 and of the lithium-ion polymer battery 13 gradually become the same and completely balanced. This automatic internal self-resonance condition is a damping effect. Even when the cell stack 11 is not in the charge and discharge processes, the damping effect as a result of the internal self-resonance of the cell stack 11 still exists, bringing the voltage of the lithium-ion battery 12 and of the lithium-ion polymer battery 13 to become the same and balanced.

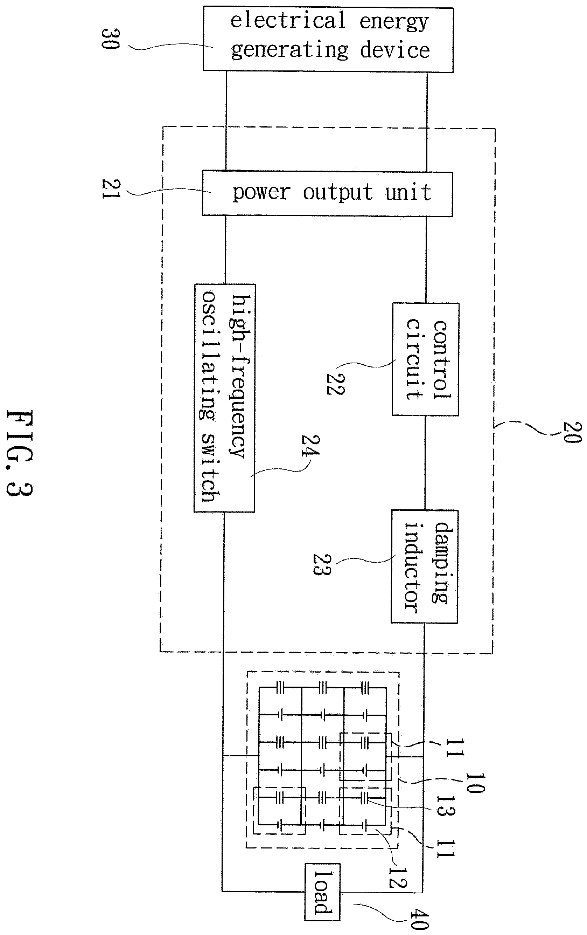

The lithium battery device 10 according to the present invention must be charged with a charging device having damping function, such as the damping charging device disclosed in Taiwan New Utility Model Patent No. M484854. Please refer to Fig. 3. The charging device 20 includes a power output unit 21, a control circuit 22, a damping inductor 23, and a high-frequency oscillating switch 24. The power output unit 21 is connectable to an electrical energy generating device 30 and is used to increase or decrease a voltage of the electrical energy output by the electrical energy generating device 30 and then outputs a voltage-regulated electrical power. The lithium battery device 10 is connected at a positive terminal to the damping inductor 23 and at a negative terminal to the high-frequency oscillating switch 24. The electrical energy generating device 30 can be a renewable energy generator or a grid power source. When the high-frequency oscillating switch 24 of the charging device 20 is actuated, the damping inductor 23 is caused to store and release electrical energy alternately at high frequency. When the high-frequency oscillating switch 24 is ON, the damping inductor 23 is caused to store electrical energy. On the other hand, when the high-frequency oscillating switch 24 is OFF, the damping inductor 23 is caused to release the stored electrical energy to charge the lithium battery device 10. Therefore, the electrical energy released from the charging device 20 is electrical energy with frequency response. And, the lithium battery device 10 can be discharged into a load 40 for the same to work.

When the damping charge device 20 charges the cell stacks 11, electric energy is charged into the lithium-ion polymer battery 13 and the voltage of the lithium-ion polymer battery 13 will increase instantaneously and becomes higher than the voltage of the lithium-ion battery 12. At this point, the lithium-ion polymer battery 13 automatically outputs electric energy to the lithium-ion battery 12 and a resonance effect occurs, which eventually brings the lithium-ion battery 12 and the lithium-ion polymer battery 13 to have the same voltage. Since the electric energy output by the charging device 20 is electrical energy with frequency response, the resonance effect occurred in the lithium battery device 10 at a frequency.

When the lithium battery device 10 is discharged into the load 40 for the same to work, the electric energy in the lithium-ion battery 12 is output as a power supply. At this point, the voltage of the lithium-ion battery 12 drops instantaneously. That is, the voltage of the lithium-ion polymer battery 13 instantaneously becomes higher than the voltage of the lithium-ion battery 12. This condition brings the lithium-ion polymer battery 13 to automatically output electric energy to the lithium-ion battery 12 and a resonance effect occurs, which eventually brings the two types of batteries 12, 13 to have the same voltage.

The lithium-ion battery 12 and the lithium-ion polymer battery 13 get a voltage balance between them through instantaneous high-frequency resonance, which is a damping effect. Since every cell stack 11 in the lithium battery device 10 will generate self-resonance during the charge and the discharge process without causing a rising temperature thereof, the lithium battery device 10 can naturally have a prolonged service life. Since the voltage of the lithium-ion battery 12 and of the lithium-ion polymer battery 13 will automatically become the same and completely balanced, it is no longer necessary to use a battery management system (BMS). As a result, an electrical appliance using the lithium battery device of the present invention does not require a BMS circuit board and can be manufactured at lowered cost and have reduced overall weight.

Since every cell stack 11 of the lithium battery device 10 has the self-resonance induced damping property, the more cell stacks 11 are included in the lithium battery device 10, the more charge and discharge paths can be provided in the lithium battery device 10 to enable faster charge and discharge.

In summary, due to the damping effect occurred as a result of the resonance between the lithium-ion battery 12 and the lithium-ion polymer battery 13, the lithium battery device 10 provided according to the present invention has the following features:
(1) During the charging and discharging processes, the damping effect as a result of the resonance between the lithium-ion battery 12 and the lithium-ion polymer battery 13 makes the charging process and the discharging process smoother to enable faster charge and faster discharge of the lithium battery device 10.
(2) Due to the automatic voltage balancing between the lithium-ion battery 12 and the lithium-ion polymer battery 13, it is not necessary to use any battery management system (BMS).
(3) The lithium-ion battery 12 and the lithium-ion polymer battery 13 have low internal resistance due to the resonance between them, and therefore, the lithium battery device 10 would not have a rising temperature during the charging and discharging processes and has high operation stability.
(4) The number of the serially or parallelly connected cell stacks 11 in the lithium battery device 10 can be increased to not only enable increased energy-storage voltage and increased discharge current, but also provide increased charge and discharge paths to enable faster charge and discharge speed of the lithium battery device 10.

The present invention has been described with a preferred embodiment thereof and it is understood that many changes and modifications in the described embodiment can be carried out without departing from the scope of the invention that is intended to be limited only by the appended claims.

## Claims

1. A battery device with damping function comprising at least two similar cell stacks (11) connected either in series or in parallel; **characterized in that** the battery device is a resonating lithium battery device, wherein each of the cell stacks (11) includes a lithium-ion battery (12) and a lithium-ion polymer battery (13); the lithium-ion battery (12) being an electrically current-type battery contributive to discharging, and the lithium-ion polymer battery (13) being an electrically voltage-type battery contributive to charging; the lithium-ion battery (12) and the lithium-ion polymer battery (13) being electrically connected in parallel; the lithium-ion battery (12) having a capacity that is about 90 to 110% of a capacity of the lithium-ion polymer battery (13); and an automatic voltage balancing occurring between the lithium-ion battery (12) and the lithium-ion polymer battery (13) to provide a damping effect as a result of current/voltage resonance transition.

2. A battery device with damping function, **characterized in that** the battery device is a resonating lithium battery device, comprising a lithium-ion battery (12) and a lithium-ion polymer battery (13); the lithium-ion battery (12) being an electrically current-type battery contributive to discharging, and the lithium-ion polymer battery (13) being an electrically voltage-type battery contributive to charging; the lithium-ion battery (12) and the lithium-ion polymer battery (13) being electrically connected in parallel; the lithium-ion battery (12) having a capacity that is about 90 to 110% of a capacity of the lithium-ion polymer battery (13); and an automatic voltage balancing occurring between the lithium-ion battery (12) and the lithium-ion polymer battery (13) to provide a damping effect as a result of current/voltage resonance transition.

## Patentansprüche

1. Batterievorrichtung mit Dämpfungsfunktion, umfassend mindestens zwei ähnliche Zellenstapel (11), die entweder in Reihe oder parallel geschaltet sind; **dadurch gekennzeichnet, dass** die Batterievorrichtung eine resonante Lithiumbatterievorrichtung ist, wobei jeder der Zellenstapel (11) eine Lithiumionenbatterie (12) und eine Lithiumionenpolymerbatterie (13) umfasst; wobei die Lithiumionenbatterie (12) eine Batterie vom elektrischen Stromtyp ist, die zum Entladen beiträgt, und die Lithiumionenpolymerbatterie (13) eine Batterie vom elektrischen Spannungstyp ist, die zum Laden beiträgt; die Lithiumionenbatterie (12) und die Lithiumionenpolymerbatterie (13) elektrisch parallel geschaltet sind; die Lithiumionenbatterie (12) mit einer Kapazität, die etwa 90 bis 110% der Kapazität der Lithiumionenpolymerbatterie (13) beträgt; und einen automatischen Spannungsausgleich, der zwischen der Lithiumionenbatterie (12) und der Lithiumionenpolymerbatterie (13) erfolgt, um einen Dämpfungseffekt als Ergebnis eines Strom / Spannungs-Resonanzübergangs bereitzustellen.

2. Batterievorrichtung mit Dämpfungsfunktion, **dadurch gekennzeichnet, dass** die Batterievorrichtung eine resonante Lithiumbatterievorrichtung ist, umfassend eine Lithiumionenbatterie (12) und eine Lithiumionenpolymerbatterie (13); wobei die Lithiumionenbatterie (12) eine Batterie vom elektrischen Stromtyp ist, die zum Entladen beiträgt, und die Lithiumionenpolymerbatterie (13) eine Batterie vom elektrischen Spannungstyp ist, die zum Laden beiträgt; die Lithiumionenbatterie (12) und die Lithiumionenpolymerbatterie (13) elektrisch parallel geschaltet sind; die Lithiumionenbatterie (12) eine Kapazität hat, die etwa 90 bis 110% der Kapazität der Lithiumionenpolymerbatterie (13) beträgt; und einen automatischen Spannungsausgleich, der zwischen der Lithiumionenbatterie (12) und der Lithiumionenpolymerbatterie (13) erfolgt, um einen Dämpfungseffekt als Ergebnis eines Strom / Spannungs-Resonanzübergangs bereitzustellen.

## Revendications

1. Dispositif de batterie avec fonction d'amortissement comprenant au moins deux piles similaires (11) connectées soit en série, soit en parallèle ; **caractérisé en ce que** le dispositif de batterie est un dispositif de batterie au lithium résonant, dans lequel chacune des piles (11) comprend une batterie lithium-ion (12) et une batterie polymère lithium-ion (13) ; la batterie lithium-ion (12) étant une batterie de type courant électrique contribuant à la décharge, et la batterie polymère lithium-ion (13) étant une batterie de type tension électrique contribuant à la charge ; la batterie lithium-ion (12) et la batterie polymère lithium-ion (13) étant connectées électriquement en parallèle ; la batterie lithium-ion (12) ayant une capacité d'environ 90 % à 110 % de la capacité de la batterie polymère lithium-ion (13) ; et un équilibre de tension automatique se produisantt entre la batterie lithium-ion (12) et la batterie polymère lithium-ion (13) pour fournir un effet d'amortissement comme résultat de la transition de résonance courant/tension.

2. Dispositif de batterie avec fonction d'amortissement, **caractérisé en ce que** le dispositif de batterie est un dispositif de batterie au lithium résonant, comprenant une batterie lithium-ion (12) et une batterie polymère lithium-ion (13) ; la batterie lithium-ion (12) étant une batterie de type courant électrique contribuant à la décharge, et la batterie polymère lithium-ion (13) étant une batterie de type tension électrique contribuant à la charge ; la batterie lithium-ion (12) et la batterie polymère lithium-ion (13) étant connectées électriquement en parallèle ; la batterie lithium-ion (12) ayant une capacité d'environ 90 % à 110 % de la capacité de la batterie polymère lithium-ion (13) ; et un équilibre de tension automatique se produisant entre la batterie lithium-ion (12) et la batterie polymère lithium-ion (13) pour fournir un effet d'amortissement comme résultat de la transition de résonance courant/tension.
